# EUROPÄISCHE PATENTSCHRIFT

(11) **EP 3 982 651 B1**
(45) Veröffentlichungstag und Bekanntmachung des Hinweises auf die Patenterteilung: **06.08.2025**
(21) Anmeldenummer: 21197021.5
(22) Anmeldetag: 16.09.2021
(51) Int. Cl.: H04W 4/46, H04W 4/38

(54) **FAHRZEUG, VORRICHTUNG, COMPUTERPROGRAMM UND VERFAHREN ZUR DURCHFÜHRUNG IN EINEM FAHRZEUG**
VEHICLE, DEVICE, COMPUTER PROGRAM AND METHOD FOR IMPLEMENTATION IN A VEHICLE
VÉHICULE, DISPOSITIF, PROGRAMME INFORMATIQUE ET PROCÉDÉ DE MISE EN OEUVRE DANS UN VÉHICULE

(30) Priorität: 06.10.2020 DE 102020212565
(43) Veröffentlichungstag der Anmeldung: 13.04.2022
(73) Patentinhaber: VOLKSWAGEN AG, 38440 Wolfsburg (DE)
(72) Erfinder: Köstermann, Janis, 10557 Berlin (DE); Hoppmann, Hendrik, 38110 Braunschweig (DE); Voltmer, Jörg, 30559 Hannover (DE)
(74) Vertreter: 2SPL Patentanwälte PartG mbB

(56) Entgegenhaltungen:
- DE-A1- 102004 017 602
- DE-A1- 102018 207 658
- DE-A1- 102020 104 357
- CADZOW COMMUNICATIONS: "Draft - RTR/ITS-00546 v1.3.2 (TR 102 893 ) TVRA Revision", vol. WG ITS WG5 Security, no. 1.3.2, 15 August 2019 (2019-08-15), pages 1 - 97, XP014354207, Retrieved from the Internet <URL:docbox.etsi.org/ITS/ITSWG5/05-CONTRIBUTIONS/2019/ITSWG5(19)000043_Draft_-_RTR_ITS-00546__v1_3_2__TR_102_893____TVRA_Revision_/ITS-00546v132.docx> [retrieved on 20190815]

## Beschreibung

Die vorliegende Erfindung bezieht sich auf ein Fahrzeug, eine Vorrichtung, ein Computerprogramm und ein Verfahren zur Durchführung in einem Fahrzeug, insbesondere aber nicht ausschließlich, auf ein Konzept für ein Fahrzeug zur Validierung von Umgebungsinformation eines oder mehrerer anderer Fahrzeuge.

Kommunikation zwischen Fahrzeugen spielt insbesondere bei autonom oder teilweise autonom fahrenden Fahrzeugen eine immer wichtigere Rolle. Die Kommunikation von Nachrichten und Meldungen hilft solchen Fahrzeugen beispielsweise Situationen in der Umgebung richtig und/oder frühzeitig erkennen und darauf reagieren zu können. Die Kommunikation, die Nachrichten und die Meldungen können der Gefahr missbräuchlicher Verwendung, Fehlerkennung/en und unerlaubten Eingriffen (z.B. "Hacking") unterliegen.

Dokument DE 10 2004 017 602 A1 schlägt ein Verfahren zur Bildung von Vertrauen bei der Kommunikation zwischen Fahrzeugen in einem Kommunikationsnetz mit direkter Fahrzeug-Fahrzeug-Kommunikation vor. Dabei empfängt ein empfangendes Fahrzeug Kommunikationssignale von einem sendenden Fahrzeug. Das empfangende Fahrzeug ermittelt eine Vertrauensinformation oder aktualisiert eine Vertrauensinformation, F1 wobei die Vertrauensinformation ermöglicht, festzustellen, ob von dem sendenden Fahrzeug gesendete Daten vertrauenswürdig sind und/oder wie vertrauenswürdig von dem sendenden Fahrzeug gesendete Daten sind. Das empfangende Fahrzeug stellt die Vertrauensinformation für eine weitere Fahrzeug-Fahrzeug-Kommunikation bereit.

Dokument DE 10 2011 083 039 A1 bezieht sich auf ein Konzept zum Betreiben eines Fahrzeugs mit einem Fahrassistenzsystems zum Bereitstellen einer Fahrassistenzfunktion und einer Steuerung zum Steuern des Fahrassistenzsystems abhängig von Fahrzeugumfelddaten und einem den Fahrzeugumfelddaten zugeordneten Gütefaktor. Der Gütefaktor wird von einem externen Steuerungsserver basierend auf aggregierten Daten mehrerer anderer Fahrzeuge ermittelt.

Dokument DE 10 2013 225 563 A1 bezieht sich auf ein Konzept zur Überwachung mindestens eines Sensors eines Fahrzeugs, das über Mittel zur drahtlosen Kommunikation verfügt. Dieses Konzept zeichnet sich dadurch aus, dass Messwerte des mindestens einen Sensors mit Hilfe der Mittel zur drahtlosen Kommunikation mit Messwerten mindestens eines Vergleichsfahrzeuges verglichen werden.

Dokument DE 10 2015 219 933 A1 bezieht sich auf ein Konzept zur Plausibilisierung von Messwerten eines Mobilgeräts. Dieses Konzept sieht vor, dass Sensorik des Mobilgeräts mindestens einen Messwert erzeugt, über einen Kommunikationsdienst mindestens zwei Informationen betreffend den mindestens einen Messwert empfangen werden und der mindestens eine Messwert anhand der mindestens zwei Informationen plausibilisiert wird.

Dokument DE 10 2020 104 357 A1 schlägt ein Konzept vor, bei dem ein Fahrzeug über ein Fehlverhalten eines anderen Fahrzeugs informiert wird, woraufhin das Fahrzeug einen Fahrverhaltensbericht (MBR) an ein weiteres Fahrzeug sendet.

Es fällt auf, dass die vorhergehenden Konzepte lediglich eine Überprüfung fahrzeugeigener Sensorik, jedoch keine Möglichkeit zur Überprüfung einer Kommunikation (z.B. umfassend Nachrichten und Meldungen) zwischen Fahrzeugen bieten.

Es besteht daher ein Bedarf nach einem verbesserten Konzept zur Überprüfung der Kommunikation von Fahrzeugen. Diesem Bedarf tragen die Gegenstände der anhängigen unabhängigen Ansprüche Rechnung.

Ausführungsbeispiele basieren auf dem Kerngedanken, dass ein Fahrzeug Umgebungsinformation, die von einem anderen Fahrzeug empfangen wurde, auf deren Validität/Zuverlässigkeit überprüfen und zusammen mit Information über die Validität/Zuverlässigkeit an das andere Fahrzeug zurückleiten und/oder an ein oder mehrere weitere Fahrzeuge weiterleiten kann. Dies erlaubt Fahrzeugen, welche die Information über die Zuverlässigkeit empfangen, eine Glaubwürdigkeit der Umgebungsinformation zu beutreilen. Eine iterative und/oder mehrfache Validierung derselben Umgebungsinformation durch mehrere Fahrzeuge innerhalb der Flotte oder eines "Schwarms" an Fahrzeugen erlaubt, wie später genauer erläutert, eine höhere Glaubwürdigkeit der Zuverlässigkeitsinformation. Das hierin vorgeschlagene Konzept kann daher auch als Konzept zur "Schwarm-Validierung" verstanden werden.

Ausführungsbeispiele schaffen ein Verfahren zur Durchführung in einem Fahrzeug. Das Verfahren umfasst ein Empfangen von Umgebungsinformation über eine Umgebung des Fahrzeugs von einem anderen Fahrzeug. Zudem umfasst das Verfahren ein Validieren der Umgebungsinformation zum Erzeugen von Zuverlässigkeitsinformation über die Umgebungsinformation, wobei das Validieren ein Vergleichen der Umgebungsinformation mit Sensordaten zumindest eines Sensors des Fahrzeugs umfasst. Das Verfahren umfasst ferner ein Empfangen von Information über einen Sensortyp zumindest eines Sensors, mit welchem die Umgebungsinformation von dem anderen Fahrzeug ermittelt wurde, und ein Auswählen eines anderen Sensortyps basierend auf der Information über den Sensortyp zum Vergleichen der Umgebungsinformation mit den Sensordaten des anderen Sensortyps. Ferner umfasst das Verfahren ein Aussenden der Umgebungsinformation mit der Zuverlässigkeitsinformation.

Dies erlaubt zum Beispiel einem oder mehreren Fahrzeugen, welche die Umgebungsinformation mit der Zuverlässigkeitsinformation empfangen, eine Glaubwürdigkeit/Validität/Plausibilität der Umgebungsinformation basierend auf der Zuverlässigkeitsinformation zu beurteilen, beispielsweise als valide oder nicht valide anzusehen, und entsprechend zu berücksichtigen oder zu ignorieren. Einflüsse durch Fehlerkennungen oder unerlaubte Einflüsse auf eine Steuerung der ein oder mehreren Fahrzeuge, welche die Zuverlässigkeitsinformation empfangen, können auf diese Weise zumindest reduziert werden. Zum Beispiel können fehlerhafte oder falsche Nachrichten/Meldungen beim Validieren erkannt und anhand entsprechender Zuverlässigkeitsinformation von den ein oder mehreren Fahrzeugen als nicht valide angesehen werden. Somit werden fehlerhafte oder falsche Nachrichten/Meldungen beispielsweise von den ein oder mehreren Fahrzeugen bei der Steuerung gegenüber als valide angesehenen Nachrichten/Meldungen weniger oder nicht berücksichtigt. Der Einfluss fehlerhafter oder falscher Nachrichten/Meldungen wird dadurch zumindest verringert.

In manchen Ausführungsbeispielen umfasst die Umgebungsinformation Messdaten der Umgebung, interpretierte Messdaten und/oder eine Nutzereingabe.

Verfahrensgemäß kann beim Validieren Zuverlässigkeitsinformation über die Messdaten, die interpretierten Messdaten und/oder die Nutzereingabe erzeugt und zusammen mit den Messdaten, den interpretierten Messdaten und/oder der Nutzereingabe ausgesendet werden. Dies erlaubt den ein oder mehreren Fahrzeugen die Beurteilung der Messdaten, der interpretierten Messdaten und/oder der Nutzereingabe basierend auch der Zuverlässigkeitsinformation.

In manchen Ausführungsbeispielen ist die Umgebungsinformation mit der Zuverlässigkeitsinformation in eine Nachricht mit Kontrollinformation und Nutzinformation eingebettet. Die Umgebungsinformation kann der Nutzinformation und die Zuverlässigkeitsinformation der Kontrollinformation zugeordnet sein. Die Kontrollinformation kann eine der Nachricht zugeordnete Kennung aufweisen.

Die Kennung erlaubt eine Identifizierung und Zuordnung der Nachricht. Insbesondere bei Verwendung des hierin vorgeschlagenen Verfahrens in mehreren Fahrzeugen einer Flotte, kann dadurch beispielsweise verhindert werden, dass ein Fahrzeug der Flotte die Umgebungsinformation mehrmals und/oder öfter als gewünscht validiert.

In manchen Ausführungsbeispielen umfasst das Validieren ein Vergleichen der Umgebungsinformation mit Sensordaten zumindest eines Sensors des Fahrzeugs und/oder ein Validieren der Umgebungsinformation anhand einer Benutzereingabe.

Das Fahrzeug ist beispielsweise werkseitig für autonomes Fahren mit dem Sensor ausgestattet. Die Sensordaten können für die Validierung maschinell mit der Umgebungsinformation verglichen werden. Ein Ergebnis der Validierung, zum Beispiel die Zuverlässigkeitsinformation, kann abhängig von Abweichungen der Sensordaten von der Umgebungsinformation sein. Die Validierung unter Verwendung der Sensordaten kann maschinell erfolgen. Somit erlaubt die Validierung mittels der Sensordaten beispielsweise ein automatisches oder maschinelles Validieren der Umgebungsinformation.

In manchen Ausführungsbeispielen umfasst das Verfahren ferner ein Empfangen von Information über einen Sensortyp zumindest eines Sensors, mit welchem die Umgebungsinformation von dem anderen Fahrzeug ermittelt wurde, und ein Auswählen eines anderen Sensortyps basierend auf der Information über den Sensortyp zum Vergleichen der Umgebungsinformation mit den Sensordaten des anderen Sensortyps.

Dadurch kann ein Einfluss systematischer Messungenauigkeiten des einen oder des anderen Sensortyps auf die Validierung zumindest reduziert werden. Wie der Fachmann verstehen wird, kann dadurch eine Zuverlässigkeit/Glaubwürdigkeit der Validierung gesteigert werden.

In manchen Ausführungsbeispielen umfasst das Empfangen von Umgebungsinformation ein Empfangen erster Zuverlässigkeitsinformation über die Umgebungsinformation von einem anderen Fahrzeug, das Validieren der Umgebungsinformation ein Erzeugen zweiter Zuverlässigkeitsinformation basierend auf der ersten Zuverlässigkeitsinformation und das Aussenden der Umgebungsinformation mit der Zuverlässigkeitsinformation ein Aussenden der zweiten Zuverlässigkeitsinformation.

Die erste Zuverlässigkeitsinformation wird beispielsweise entsprechend dem hier vorgeschlagenen Verfahren durch das andere Fahrzeug erzeugt und ausgesendet. Die zweite Zuverlässigkeitsinformation, welche auf einer Anzahl an Validierungen basiert basiert, kann gegenüber Zuverlässigkeitsinformation, welche auf einer geringeren Anzahl an Validierungen basiert, eine höhere Glaubwürdigkeit oder Vertrauenswürdigkeit aufweisen. Die zweite Zuverlässigkeitsinformation weist beispielsweise eine höherer Glaubwürdigkeit auf als die erste Zuverlässigkeitsinformation. Durch eine Anzahl/Mehrzahl an Validierungen wird ein missbräuchlicher Eingriff in die Kommunikation zwischen Fahrzeugen beispielsweise mit einer höheren Wahrscheinlichkeit erkannt und anhand der aus der Anzahl der Validierungen resultierenden Zuverlässigkeitsinformation als nicht-valide eingestuft.

Weitere Ausführungsbeispiele schaffen ein Verfahren für ein Fahrzeug. Das Verfahren umfasst ein Erhalten von Umgebungsinformation über eine Umgebung des Fahrzeugs. Ferner umfasst das Verfahren ein Senden der Umgebungsinformation an zumindest ein anderes Fahrzeug zur Validierung der Umgebungsinformation durch das andere Fahrzeug und Erzeugung von Zuverlässigkeitsinformation über die Umgebungsinformation. Zudem umfasst das Verfahren ein Empfangen der Zuverlässigkeitsinformation von dem anderen Fahrzeug.

Die Zuverlässigkeitsinformation kann als ein Feedback des anderen Fahrzeugs zu der Umgebungsinformation verstanden werden. Dies erlaubt dem Fahrzeug eine Zuverlässigkeit oder Glaubwürdigkeit der von diesem erhaltenen Umgebungsinformation anhand der Zuverlässigkeitsinformation zu beurteilen. Je nach Zuverlässigkeit oder Glaubwürdigkeit der Umgebungsinformation, kann die Umgebungsinformationen Einfluss auf eine Steuerung des Fahrzeugs haben oder von dem Fahrzeug ignoriert werden. Dies erlaubt zum Beispiel einen Einfluss unerlaubter Eingriffe in die Kommunikation zwischen Fahrzeugen, zum Beispiel durch Inverkehrbringen falscher Umgebungsinformation, zumindest zu verringern.

Weitere Ausführungsbeispiele schaffen ein Computerprogramm mit einem Programmcode zum Durchführen eines der hierin vorgeschlagenen Verfahren, wenn der Programmcode auf einem Computer, einem Prozessor, einer Datenverarbeitungsschaltung, einem Kontrollmodul oder einer programmierbaren Hardwarekomponente ausgeführt wird.

Weitere Ausführungsbeispiele schaffen eine Vorrichtung für ein Fahrzeug. Die Vorrichtung umfasst eine oder mehrere Schnittstellen zur Kommunikation und eine Datenverarbeitungsschaltung zur Durchführung eines der hierin vorgeschlagenen Verfahren.

Weitere Ausführungsbeispiele schaffen ein Fahrzeug umfassend die hierin vorgeschlagene Vorrichtung.

Weitere vorteilhafte Ausführungsbeispiele werden nachfolgend anhand der in den Zeichnungen dargestellten Ausführungsbeispiele, auf welche Ausführungsbeispiele generell jedoch nicht beschränkt sind, näher beschrieben. Es zeigen:
Fig. 1 ein Blockschaltbild eines Ablaufdiagramms eines Ausführungsbeispiels eines Verfahrens zur Durchführung in einem Fahrzeug;
Fig. 2 ein Blockschaltbild eines Ausführungsbeispiels einer Vorrichtung für ein Fahrzeug;
Fig. 3 ein Blockschaltbild eines Ablaufdiagramms eines Ausführungsbeispiels eines Verfahrens für ein Fahrzeug;
Fig. 4 ein Blockschaltbild eines Ausführungsbeispiels einer Vorrichtung für ein Fahrzeug; und
Fig. 5a, 5b, 5c und 5d ein beispielhaftes Szenario einer Kommunikation zwischen Fahrzeugen.

Verschiedene Ausführungsbeispiele werden hierin nun ausführlicher unter Bezugnahme auf die beiliegenden Zeichnungen beschrieben, in denen einige Ausführungsbeispiele dargestellt sind. Optionale Merkmale oder Komponenten sind dabei in gestrichelten Linien dargestellt.

Obwohl Ausführungsbeispiele auf verschiedene Weise modifiziert und abgeändert werden können, sind Ausführungsbeispiele in den Figuren als Beispiele dargestellt und werden hierin ausführlich beschrieben. Es sei jedoch klargestellt, dass nicht beabsichtigt ist, Ausführungsbeispiele auf die jeweils offenbarten Formen zu beschränken, sondern dass Ausführungsbeispiele vielmehr sämtliche funktionale und/oder strukturelle Modifikationen, Äquivalente und Alternativen, die im Bereich der Erfindung liegen, abdecken sollen.

Man beachte, dass ein Element, das als mit einem anderen Element "verbunden" oder "verkoppelt" bezeichnet wird, mit dem anderen Element direkt verbunden oder verkoppelt sein kann oder dass dazwischenliegende Elemente vorhanden sein können. Wenn ein Element dagegen als "direkt verbunden" oder "direkt verkoppelt" mit einem anderen Element bezeichnet wird, sind keine dazwischenliegenden Elemente vorhanden. Andere Begriffe, die verwendet werden, um die Beziehung zwischen Elementen zu beschreiben, sollten auf ähnliche Weise interpretiert werden (z.B., "zwischen" gegenüber "direkt dazwischen", "angrenzend" gegenüber "direkt angrenzend" usw.).

Die Terminologie, die hierin verwendet wird, dient nur der Beschreibung bestimmter Ausführungsbeispiele und soll die Ausführungsbeispiele nicht beschränken. Wie hierin verwendet, sollen die Singularformen "einer", "eine", "eines" und "der", "die", "das" auch die Pluralformen beinhalten, solange der Kontext nicht eindeutig etwas anderes angibt. Ferner sei klargestellt, dass die Ausdrücke wie z.B. "beinhaltet", "beinhaltend", "aufweist", "umfasst", "umfassend" und/oder "aufweisend", wie hierin verwendet, das Vorhandensein von genannten Merkmalen, ganzen Zahlen, Schritten, Arbeitsabläufen, Elementen und/oder Komponenten angeben, aber das Vorhandensein oder die Hinzufügung von einem bzw. einer oder mehreren Merkmalen, ganzen Zahlen, Schritten, Arbeitsabläufen, Elementen, Komponenten und/oder Gruppen davon nicht ausschließen.

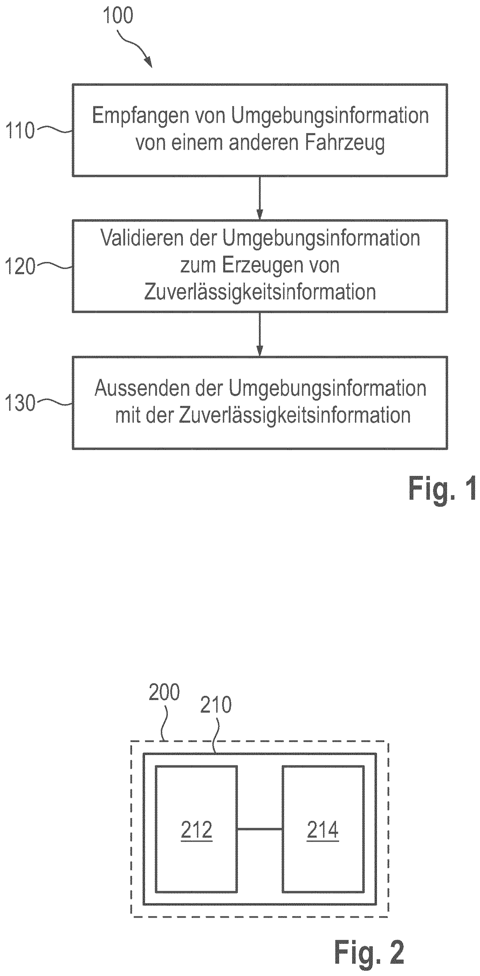

Fig. 1 zeigt ein Blockschaltbild eines Ablaufdiagramms eines Ausführungsbeispiels eines Verfahrens 100 zur Durchführung in einem Fahrzeug. Das Verfahren 100 umfasst ein Empfangen 110 von Umgebungsinformation über eine Umgebung des Fahrzeugs von einem anderen Fahrzeug. Zudem umfasst das Verfahren 100 ein Validieren 120 der Umgebungsinformation zum Erzeugen von Zuverlässigkeitsinformation über die Umgebungsinformation. Darüber hinaus umfasst das Verfahren 100 ein Aussenden 130 der Umgebungsinformation mit der Zuverlässigkeitsinformation.

Das Verfahren 100 erlaubt einem oder mehreren Fahrzeugen, welche die mit der Zuverlässigkeitsinformation ausgesendete Umgebungsinformation empfangen, eine Beurteilung einer Glaubwürdigkeit der Umgebungsinformation basierend auf der Zuverlässigkeitsinformation. Wie später genauer erläutert, können dadurch ungewünschte Einflüsse fehlerhafter kommunizierter Umgebungsinformation reduziert werden.

Die Umgebungsinformation umfasst Information über eine Situation in der Umgebung des Fahrzeugs. Zum Beispiel umfasst die Umgebungsinformation ein oder mehrere Informationen über Geisterfahrer, Unfälle, sogenannte "Liegenbleiber", Baustellen, Personen auf der Fahrbahn, ein Hindernis, Feuer, Wetterereignisse (Glätte/Reibwert, Nebel, Sturm etc.), Fahrbahnüberflutung, Aquaplaning und/oder dergleichen.

Insbesondere können die Umgebungsinformation Messdaten der Umgebung und/oder interpretierte Messdaten umfassen. Die Messdaten sind zum Beispiel Sensordaten, die durch einen oder mehrere Sensoren oder eine Sensorik eines anderen Fahrzeugs und/oder einer Infrastruktur aufgenommen und ausgesendet wurden. Beispiele für solche Sensoren sind Lidarsensoren, Radarsensoren, Time-Of-Flight- (TOF-) Kameras, Bild- und/oder Videokameras. Entsprechend können die Messdaten Bilddaten, eine sogenannte "Punktwolke" und/oder Abstandswerte zu einem oder mehreren Objekten in der Umgebung enthalten. Die interpretierten Messdaten enthalten beispielsweise aus solchen "rohen" Messdaten durch Weiterverarbeitung und/oder Interpretation gewonnene Information über Objekte und/oder eine Situation in der Umgebung. Zum Beispiel enthalten die interpretierten Messdaten Informationen über eine Position, eine Form, eine Geschwindigkeit, eine Beschleunigung, eine Größe, eine Trajektorie und/oder dergleichen von Objekten, Verkehrsteilnehmern und/oder Fahrzeugen. Die interpretierten Messdaten umfassen zum Beispiel eine Kooperatives-Bewusstseins-Nachricht (engl.: cooperative awareness message, CAM), eine Kollektive-Wahrnehmungs-Nachricht (engl.: collective perception message, CPM), eine Dezentralisierte-Umwelt-Benachrichtigungs-Nachricht (engl.: decentralized environmental notification message, DENM), ein Signal-Phasen-Und-Timing (engl.: signal phase and timing, SPaT) und/oder eine Meldung mit Information zu Gefahren, Objekten, der Situation, des Wetters und/oder einer Fahrbahnbeschaffenheit in der Umgebung.

Die Umgebungsinformation kann optional zumindest eine Nutzereingabe umfassen. Die Nutzereingabe umfasst beispielsweise Informationen über einen Steuerungsbefehl (zum Beispiel einen Lenkeinschlag, eine Betätigung eines Pedals, eine Spracheingabe, eine Eingabe über ein Bedienfeld und/oder dergleichen). Die Nutzereingabe kann auf eine bestimmte Situation in der Umgebung hinweisen. Eine Vollbremsung durch einen Fahrer deutet beispielsweise auf eine Gefahrensituation hin. Als Nutzereingabe kann auch eine solche Interpretation einer unmittelbaren Nutzereingabe, wie vorliegende der Vollbremsung, verstanden werden.

Wie der Fachmann verstehen wird, kann ein Aussenden der Umgebungsinformation durch das andere Fahrzeug und das Empfangen 110 der Umgebungsinformation mittels verschiedener Konzepte und entsprechender Mittel zur Kommunikation zwischen Fahrzeugen erfolgen. Die Kommunikation (das Aussenden und Empfangen 110) erfolgt beispielsweise über Fahrzeug-zu-Fahrzeug- (engl.: vehicle-to-vehicle-, V2V-, oder car-to-car-, C2C-) Kommunikation, Fahrzeug-zu-Infrastruktur- (engl.: vehicle-to-infrastructure-, V2I-, oder car-to- infrastructure -, C2I-) Kommunikation und/oder Fahrzeug-zu-Irgendetwas- (engl.: vehicle-to-anything-, V2X-, oder car-to- anything -, C2X-) Kommunikation. Entsprechende Mittel zum Empfangen 110 umfassen zum Beispiel eine Schnittstelle zur zweckgebundenen Nahbereichskommunikation (engl.: dedicated short-range communication, DSRC) und/oder zur Kommunikation über das Mobilfunknetz (zum Beispiel eine Dritte Generation Partnerschaftsprojekt- (engl.: 3rd Generation Partnership Project-, 3GPP-) Schnittstelle, wie etwa eine PC5-Schnittstelle).

Das Validieren 120 der Umgebungsinformation kann als ein Überprüfen der Umgebungsinformation auf deren Zuverlässigkeit, Plausibilität oder Glaubwürdigkeit verstanden werden.

Das Validieren 120 umfasst beispielsweise ein Vergleichen der Umgebungsinformation mit Sensordaten zumindest eines Sensors des Fahrzeugs und/oder ein Validieren der Umgebungsinformation anhand einer Benutzereingabe.

Optional kann das Fahrzeug mit mehreren Sensoren ausgestattet sein. Entsprechend können die Sensordaten Messdaten mehrerer Sensoren enthalten. Das Fahrzeug kann werkseitig für autonomes Fahren mit dem zumindest einem Sensor ausgerüstet sein, welcher beispielsweise einer Erfassung der Umgebung für autonomes Fahren dient. Die Sensordaten können entsprechend solche sein, welche insbesondere zur Erfassung der Umgebung für autonomes Fahren dienen. Die ein oder mehreren Sensoren umfassen beispielsweise einen Lidarsensor, einen Radarsensor, eine TOF-Kamera, eine Bildkamera, eine Videokamera, einen Ultraschallsensor und/oder dergleichen. Optional umfassen die ein oder mehreren Sensoren zumindest einen Regensensor, einen Temperatursensor, einen Reifendrehzahlsensor, einen G-Kraft-Sensor, einen Sensor eines Antiblockiersystems (ABS), einen Sensor eines Airbags und/oder dergleichen. Die Sensordaten können dementsprechend Information über das Wetter und/oder die Fahrbahnbeschaffenheit in der Umgebung und/oder über eine Geschwindigkeit und/oder eine Beschleunigung des Fahrzeugs enthalten. Optional können die Sensordaten für eine bessere Vergleichbarkeit mit der Umgebungsinformation aufbereitet und/oder interpretiert werden. Optional kann die Umgebungsinformation für eine bessere Vergleichbarkeit mit den Sensordaten aufbereitet und/oder interpretiert werden. Das Validieren 120 sieht beispielsweise ein Vergleichen von aus den Sensordaten und der Umgebungsinformation hervorgehenden Formen, Größen und/oder Positionen für dasselbe Objekt in der Umgebung vor. Vor dem Validieren mittels der Sensordaten kann eine einfachere Plausibilisierung stattfinden. Sensordaten, welche eine unplausible Situation (z.B. einen Geisterfahrer auf baulich nicht getrennten Fahrbahnen) anzeigen, können für das Validieren disqualifiziert werden und nur plausible Sensordaten für das Validieren verwendet werden. Als Grundlage für eine solche Plausibilisierung können zum Beispiel Kartendaten eines Navigationssystems herangezogen werden. Optional kann ein Ergebnis einer solchen Plausibilisierung als Eingangsgröße für das Validieren mit den Sensordaten herangezogen werden, z.B. als Gewichtung und/oder, um Schwellwerte anzupassen.

Die Benutzereingabe zum Validieren der Umgebungsinformation umfasst beispielsweise Informationen über einen Steuerungsbefehl (zum Beispiel einen Lenkeinschlag, eine Betätigung eines Pedals, eine Spracheingabe, eine Eingabe über ein Bedienfeld und/oder dergleichen). Die Benutzereingabe kann auf eine bestimmte Situation in der Umgebung hinweisen. Ein Bremsen durch einen Fahrer des Fahrzeugs deutet beispielsweise auf ein bevorstehendes Hindernis oder ein vorausfahrendes Fahrzeug hin. Optional umfasst die Benutzereingabe eine Eingabe auf eine Abfrage und/oder eine (visuelle) Darstellung der Umgebungsinformation. Die Umgebungsinformation gibt beispielsweise an, dass ein vorausfahrendes Fahrzeug verzögert. Die Umgebungsinformation über das vorausfahrende Fahrzeug wird beispielsweise abhängig von einer Betätigung einer Bremse des Fahrzeugs und/oder durch eine Eingabe auf eine an einen Insassen des Fahrzeugs gerichtete Abfrage, ob das vorausfahrende Fahrzeug verzögert, bestätigt oder widerlegt.

Optional kann durch von einer Verkehrsinfrastruktur ermittelte und empfangene Information zur Validierung der Umgebungsinformation verwendet werden. Solche Verkehrsinfrastruktur umfasst beispielsweise vernetzte Verkehrsleitsysteme oder mit zur Kommunikation über V2V, V2I, V2X, DSRC und/oder 3GPP ausgestattete Elemente (z.B. Ampeln). Eine mehrfache Ausführung des Validierens unter Verwendung von Information, welche von Verkehrsinfrastrukturelementen empfangen wurde, erlaubt ein Bestimmen einer Quote, mit welcher die Umgebungsinformation beim Validieren mit diesen Informationen, als valide, bzw. als nicht valide beurteilt wurde. Diese Quote kann bei nachfolgenden Validierungen mittels dieses Verkehrsinfrastrukturelements als Gewichtung der von diesem Infrastrukturelement empfangenen Information verwendet werden. Die Gewichtung erlaubt eine Glaubwürdigkeit der nachfolgenden Validierungen mittels dieses Verkehrsinfrastrukturelements zu beurteilen.

Optional können Informationen (z.B. Wetterdaten oder Satellitenaufnahmen) weiterer Datenquellen (z.B. Wetterstationen, Internet) zur Validierung herangezogen werden.

Optional können die Umgebungsinformationen unter Verwendung anderer kommunizierter Umgebungsinformation validiert werden, welche zu einer anderen Zeit, an einem anderen Ort und/oder bei gleicher Wetterlage durch das Fahrzeug empfangen wurden. Zum Beispiel kann die Umgebungsinformationen für die Validierung mit solcher anderer Umgebungsinformation abgeglichen werden. Für einen solchen Abgleich kann zum Beispiel künstliche Intelligenz in Form eines mit einer Mehrzahl an Umgebungsinformationen als Trainingsdaten trainierten neuronalen Netzes verwendet werden.

Entsprechend einem Ergebnis der Validierung wird beispielsweise die Zuverlässigkeitsinformation erzeugt. Die Zuverlässigkeitsinformation kann als Maß für eine Genauigkeit und/oder eine Glaubwürdigkeit/Validität/Plausibilität der Umgebungsinformation verstanden werden. Die Zuverlässigkeitsinformation umfasst zum Beispiel einen (einheitslosen) Zahlenwert, eine Zählvariable, einen binären Wert (z.B. mit den möglichen Zuständen: valide und nicht valide), einen Wahrscheinlichkeitswert und/oder einen Fehlerwert zur Angabe der Glaubwürdigkeit/Validität/Plausibilität und/oder einer Genauigkeit oder Ungenauigkeit der Umgebungsinformation. Anhand des binären Werts oder einem Schwellenwertvergleich des Fehlerwerts, des Wahrscheinlichkeitswerts, der Zählvariable und/oder des Zahlenwerts kann die Umgebungsinformation von den ein oder mehreren Fahrzeugen, welche die Zuverlässigkeitsinformation empfangen, klassifiziert werden. Eine Klassifizierung der Glaubwürdigkeit/Validität/Plausibilität der Umgebungsinformation in der Zuverlässigkeitsinformation weist beispielsweise mindestens folgende Klassen auf: nicht valide und valide. Die Klassifizierung kann bevorzugt weitere Abstufungen oder Gewichtungen aufweisen.

Das Fahrzeug kann auf die Umgebungsinformation selbst reagieren. Eine Reaktion des Fahrzeugs kann von einem Ergebnis der Validierung abhängen. Die Umgebungsinformation beispielsweise wird nur, wenn sie als valide angesehen wird, für einen Benutzer des Fahrzeugs angezeigt und/oder führt nur, wenn sie als valide angesehen wird, zu Fahreingriffen basierend auf der Umgebungsinformation.

Das Aussenden 130 der Umgebungsinformation mit der Zuverlässigkeitsinformation erfolgt beispielsweise über zumindest eines der oben genannten Konzepte (V2V, V2I, V2X, DSRC, 3GPP) zur Kommunikation zwischen Fahrzeugen und entsprechenden Mitteln/Schnittstellen dieses Konzepts oder dieser Konzepte. Dies erlaubt ein Bereitstellen der Umgebungsinformation zusammen mit der Zuverlässigkeitsinformation für ein oder mehrere andere Fahrzeuge zur Beurteilung der Umgebungsinformation basierend auf der Zuverlässigkeitsinformation durch die ein oder mehreren anderen Fahrzeugen. Unter den ein oder mehreren anderen Fahrzeugen kann sich das (andere) Fahrzeug befinden, von welchem die Umgebungsinformationen stammt. Auf diese Weise erhält dieses Fahrzeug eine zum Beispiel für eine Sensorkalibrierung und/oder Sensorvalidierung nützliche Rückmeldung über die Umgebungsinformation.

Die Umgebungsinformation wird zum Beispiel zusammen mit der Zuverlässigkeitsinformation in eine gemeinsame Datenstruktur ausgesendet, um eine Zuordnung der Zuverlässigkeitsinformation zu der Umgebungsinformation durch Fahrzeuge, welche die Umgebungsinformation mit der Zuverlässigkeitsinformation empfangen, zu erleichtern. Wie der Fachmann verstehen wird, kann dadurch zudem eine Auslastung eines Kommunikationspfades, über welchen die Umgebungsinformation und die Zuverlässigkeitsinformation kommuniziert werden verringert werden.

Das Aussenden 130 kann abhängig von dem Validieren 120 der Umgebungsinformationen sein und beispielsweise nur erfolgen, wenn die Umgebungsinformation basierend auf dem Validieren und/oder der Zuverlässigkeitsinformation120 als valide eingestuft ist. Wie der Fachmann verstehen wird ergibt sich dadurch der Vorteil, dass eine Verbreitung falscher, fehlerhafter und/oder nicht valider Umgebungsinformation dadurch unterbunden werden kann. Zum Beispiel wird ein zur Weiterverteilung der Umgebungsinformation notwendiger digitaler Schlüssel nur, wenn die Umgebungsinformation basierend auf dem Validieren und/oder der Zuverlässigkeitsinformation120 als valide eingestuft ist, von einem externen Server/Backend bezogen. Damit kann die Verbreitung nichtverifizierter Botschaften technisch unterbunden werden und einem Missbrauch und/oder Hacking vorgebeugt werden.

Das Verfahren 100 ermöglicht den Fahrzeugen/Empfängerfahrzeugen, welche die Umgebungsinformation mit der Zuverlässigkeitsinformation empfangen, die Genauigkeit und/oder die Glaubwürdigkeit/Validität/Plausibilität der Umgebungsinformation anhand der Zuverlässigkeitsinformation zu beurteilen. Die Umgebungsinformation wird beispielsweise entsprechend einer auf der Zuverlässigkeitsinformation basierenden Gewichtung bei einer Steuerung der Empfängerfahrzeuge berücksichtigt. Das Verfahren 100 erlaubt es den Empfängerfahrzeugen beispielsweise als glaubwürdig/valide/plausibel angesehene Umgebungsinformation höher zu gewichten als nicht glaubwürdig/valide/plausibel angesehene Umgebungsinformation, wie zum Beispiel falsche oder fehlerhafte Nachrichten/Meldungen. Auf diese Weise kann ein ungewünschter Einfluss dieser Nachrichten/Meldungen reduziert werden.

Optional umfasst das Verfahren 100 ein Empfangen von Information über einen Sensortyp zumindest eines Sensors, mit welchem die Umgebungsinformation von dem anderen Fahrzeug ermittelt wurde. Zudem kann das Verfahren 100 ein Auswählen eines anderen Sensortyps basierend auf der Information über den Sensortyp zum Vergleichen der Umgebungsinformation mit den Sensordaten des anderen Sensortyps umfassen.

Dadurch kann ein Einfluss systematischer Messungenauigkeiten des einen oder des anderen Sensortyps auf die Validierung zumindest reduziert werden. Somit kann die Zuverlässigkeit der Validierung gesteigert werden.

Das Empfangen der Information über den Sensortyp erfolgt beispielsweise mittels der bereits genannten Konzepte (V2V, V2I, V2X, DSRC, 3GPP) und entsprechenden Mitteln/Schnittstellen. Bevorzugt erfolgt das Empfangen der Information über den Sensortyp über die gleiche Schnittstelle, welche für das Empfangen der Umgebungsinformation genutzt wird.

Es sei darauf hingewiesen, dass das Verfahren 100 optional iterativ und/oder für Umgebungsinformation von mehreren anderen Fahrzeugen ausgeführt werden kann. Wie später näher erläutert, erlaubt dies beispielsweise einen durch mehrere aufeinanderfolgende verfahrensgemäße Validierungen der Umgebungsinformationen und eine Erzeugung eines auf den mehreren Validierungen basierenden kumulativen Wert für die Zuverlässigkeitsinformation.

Das hierin vorgeschlagene Verfahren wird beispielsweise durch eine auf dem Fahrzeug angebrachte Vorrichtung durchgeführt.

Fig. 2 zeigt ein Blockschaltbild eines Ausführungsbeispiels einer Vorrichtung 210 für ein Fahrzeug 200.

Die Vorrichtung 210 umfasst eine oder mehrere Schnittstellen 212 zur Kommunikation. Zudem umfasst die Vorrichtung 210 eine Datenverarbeitungsschaltung 214 zur Ausführung des Verfahrens 100.

Zur Ausführung des Verfahrens 100 kann die Datenverarbeitungsschaltung 214 über die ein oder mehreren Schnittstellen 212 die Umgebungsinformation über eine Umgebung des Fahrzeugs 200 von einem anderen Fahrzeug empfangen. Verfahrensgemäß kann die Datenverarbeitungsschaltung 214 ferner die Umgebungsinformation zum Erzeugen von Zuverlässigkeitsinformation über die Umgebungsinformation, wie vorhergehend beschrieben, beispielsweise mittels Sensordaten und/oder der Benutzereingabe validieren. Zudem kann die Datenverarbeitungsschaltung 214 die Umgebungsinformation mit der Zuverlässigkeitsinformation über die ein oder mehreren Schnittstellen 212 aussenden.

Die ein oder mehreren Schnittstellen 212 der Vorrichtung 210 können in Ausführungsbeispielen Kontakte zu der Datenverarbeitungsschaltung 214 umfassen. Sie können in Ausführungsbeispielen auch als separate Hardware ausgeführt sein. Sie können Speicher umfassen, die die zu sendenden beziehungsweise die empfangenen Signale zumindest vorübergehend speichern. Die ein oder mehreren Schnittstellen 212 können zum Empfang von elektrischen Signalen ausgebildet sein, zum Beispiel als Busschnittstelle, oder als optische Schnittstelle. Sie können darüber hinaus in Ausführungsbeispielen zur Funkübertragung ausgebildet sein und ein Radio-Frontend sowie zugehörige Antennen umfassen. Ferner können die ein oder mehreren Schnittstellen 212, zum Beispiel für den CAN-Bus (CAN:=Controller Area Network), Synchronisationsmechanismen zur Synchronisierung mit dem jeweiligen Übertragungsmedium umfassen. In Ausführungsbeispielen können die ein oder mehreren Schnittstellen 212 dazu ausgebildet sein, um zum Empfangen 110 und Aussenden 130 via V2V, V2I, V2X, DSRC und/oder 3GPP mit anderen Fahrzeugen zu kommunizieren. Ferner können die ein oder mehreren Schnittstellen 212 zumindest eine Schnittstelle zu einem Sensor des Fahrzeugs 200 umfassen, um es der Datenverarbeitungsschaltung 214 zu ermöglichen Sensordaten des Sensors zur Validierung von dem Sensor zu empfangen.

Die Datenverarbeitungsschaltung 214 kann in Ausführungsbeispielen Hardware sein, die zur Durchführung eines der hierin beschriebenen Verfahrens ausgebildet ist. Dies können beliebige Prozessorkerne, wie Digitale Signal-Prozessorkerne (DSPs) oder andere Prozessoren sein. Ausführungsbeispiele sind dabei nicht auf einen bestimmten Typ von Prozessorkern eingeschränkt. Es sind beliebige Prozessorkerne oder auch mehrere Prozessorkerne oder Mikrokontroller zur Implementierung der Datenverarbeitungsschaltung 214 denkbar. Es sind auch Implementierungen in integrierter Form mit anderen Vorrichtungen denkbar, beispielsweise in einer Steuereinheit für ein Fahrzeug, die zusätzlich noch ein oder mehrere andere Funktionen umfasst. In Ausführungsbeispielen kann die Datenverarbeitungsschaltung 214 durch einen Prozessorkern, einen Computerprozessorkern (CPU = Central Processing Unit), einen Grafikprozessorkern (GPU = Graphics Processing Unit), einen anwendungsspezifischen integrierten Schaltkreiskern (ASIC = Application-Specific Integrated Circuit), einen integrierten Schaltkreis (IC = Integrated Circuit), ein Ein-Chip-Systemkern (SOC = System on Chip), ein programmierbares Logikelement oder ein feldprogrammierbares Gatterarray mit einem Mikroprozessor (FPGA = Field Programmable Gate Array) als Kern des oben genannten Bausteins oder der Bausteine realisiert sein die Datenverarbeitungsschaltung 214 kann demnach jedweder Komponente entsprechen, die auf maschinelle Weise die Umgebungsinformation empfangen, zur Erzeugung der Zuverlässigkeitsinformation validieren und mit der Zuverlässigkeitsinformation aussenden kann.

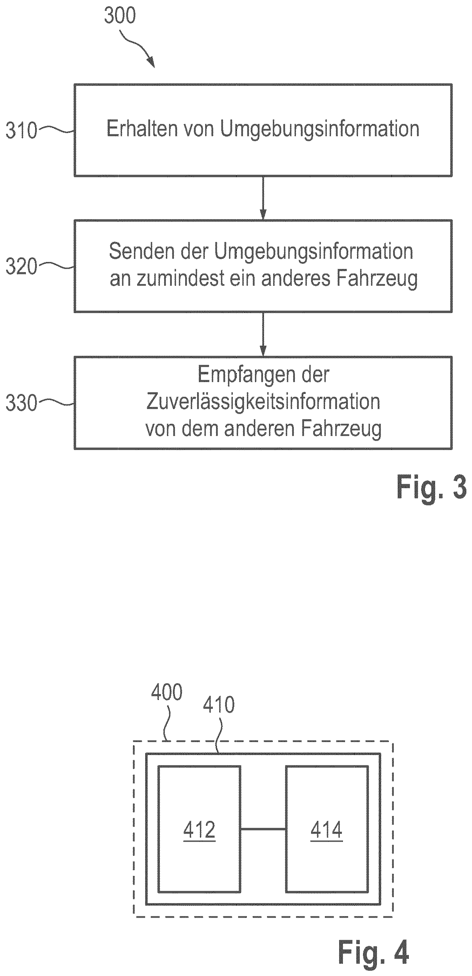

Wie vorhergehend beschrieben, kann die Umgebungsinformation mit der Zuverlässigkeitsinformation insbesondere durch das Fahrzeug empfangen werden, von welchem die Umgebungsinformation zur Validierung ausgesendet wurde, bzw. welches die Umgebungsinformation zur Validierung ausgesendet hat. Fig. 3 zeigt ein Blockschaltbild eines Ablaufdiagramms eines Ausführungsbeispiels eines Verfahrens 300 für ein solches Fahrzeug.

Das Verfahren 300 umfasst ein Erhalten 310 von Umgebungsinformation über eine Umgebung des Fahrzeugs. Zudem umfasst das Verfahren 300 ein Senden 320 der Umgebungsinformation an zumindest ein anderes Fahrzeug zur Validierung der Umgebungsinformation durch das andere Fahrzeug und Erzeugung von Zuverlässigkeitsinformation über die Umgebungsinformation. Zudem umfasst das Verfahren 300 ein Empfangen 330 der Zuverlässigkeitsinformation von dem anderen Fahrzeug. Optional kann das Fahrzeug zudem die Umgebungsinformation von dem anderen Fahrzeug empfangen.

Das Erhalten 310 der Umgebungsinformation über die Umgebung des Fahrzeugs umfasst beispielsweise ein sensorisches Erfassen der Umgebungsinformation über die Umgebung mittels ein oder mehrerer Sensoren (umfassend z.B. einen Lidarsensor, einen Radarsensor, eine TOF-Kamera, eine Bildkamera, eine Videokamera, einen Ultraschallsensor, einen Regensensor, einen Temperatursensor, einen Reifendrehzahlsensor, einen G-Kraft-Sensor, einen Sensor eines Antiblockiersystems (ABS) und/oder dergleichen). Alternativ oder zusätzlich umfasst das Erhalten 310 ein Empfangen der Umgebungsinformation. Das Fahrzeug kann die Umgebungsinformation beispielsweise mittels zumindest eines der hierin beschriebenen Konzepte (V2V, V2I, V2X, DSRC, 3GPP) und entsprechenden Mitteln/Schnittstellen von einem oder mehreren anderen Fahrzeugen und/oder einer Verkehrsinfrastruktur empfangen.

Unter Anwendung jeweils zumindest eines dieser Konzepte (V2V, V2I, V2X, DSRC, 3GPP) erfolgt beispielsweise das Senden 320 und Empfangen 330 der Umgebungsinformation, bzw. der Zuverlässigkeitsinformation. Die Validierung erfolgt beispielsweise wie im Zusammenhang mit Verfahren 100 erläutert auf dem zumindest einen anderen Fahrzeug, welches die Umgebungsinformation zur Validierung empfängt.

Wie bereits im Zusammenhang mit dem Verfahren 100 erläutert, erlaubt die empfangene Zuverlässigkeitsinformation dem Fahrzeug, das die Zuverlässigkeitsinformation empfängt, eine Beurteilung der Glaubwürdigkeit/Validität/Plausibilität der Umgebungsinformation anhand der Zuverlässigkeitsinformation. Außerdem erlaubt die Zuverlässigkeitsinformation dem Fahrzeug eine Sensorvalidierung der ein oder mehreren Sensoren, mit welchen die Umgebungsinformation ermittelt wurde.

Optional umfasst das Verfahren 300 ein Aussenden von Information über einen Sensortyp zumindest eines Sensors, mit welchem die Umgebungsinformation von dem anderen Fahrzeug ermittelt wurde. Dies erlaubt es dem anderen Fahrzeug einen anderen Sensortyp basierend auf der Information über den Sensortyp zum Validieren/Vergleichen der Umgebungsinformation mit den Sensordaten des anderen Sensortyps auszuwählen.

Es sei darauf hingewiesen, dass das Verfahren 300 optional iterativ, mehrfach, durch Zusammenwirken mit mehreren anderen Fahrzeugen und/oder für weitere Umgebungsinformation ausgeführt werden kann.

Das hierin vorgeschlagene Verfahren 300 wird beispielsweise durch eine auf dem Fahrzeug angebrachte Vorrichtung durchgeführt.

Fig. 4 zeigt ein Blockschaltbild eines Ausführungsbeispiels einer Vorrichtung 410 für ein Fahrzeug 400.

Die Vorrichtung 410 umfasst eine oder mehrere Schnittstellen 412 zur Kommunikation. Zudem umfasst die Vorrichtung 410 eine Datenverarbeitungsschaltung 414 zur Durchführung des Verfahrens 300.

Zur Durchführung des Verfahrens 300 kann die Datenverarbeitungsschaltung 414 über die ein oder mehreren Schnittstellen 412 Umgebungsinformation über eine Umgebung des Fahrzeugs erhalten. Ferner kann die Datenverarbeitungsschaltung 414 die Umgebungsinformation über die ein oder mehreren Schnittstellen 412 zur Validierung an das zumindest eine andere Fahrzeug senden und die Zuverlässigkeitsinformation von dem zumindest einen anderen Fahrzeug empfangen.

Die ein oder mehreren Schnittstellen 412 der Vorrichtung 410 können in Ausführungsbeispielen Kontakte zu der Datenverarbeitungsschaltung 414 umfassen. Sie können in Ausführungsbeispielen als separate Hardware ausgeführt sein. Sie können Speicher umfassen, die die zu sendenden beziehungsweise die empfangenen Signale zumindest vorübergehend speichern. Die ein oder mehreren Schnittstellen 412 können zum Empfang von elektrischen Signalen ausgebildet sein, zum Beispiel als Busschnittstelle, oder als optische Schnittstelle. Sie können darüber hinaus in Ausführungsbeispielen zur Funkübertragung ausgebildet sein und ein Radio-Frontend sowie zugehörige Antennen umfassen. Ferner können die ein oder mehreren Schnittstellen 412, zum Beispiel für den CAN-Bus (CAN:=Controller Area Network), Synchronisationsmechanismen zur Synchronisierung mit dem jeweiligen Übertragungsmedium umfassen. In Ausführungsbeispielen können die ein oder mehreren Schnittstellen 412 dazu ausgebildet sein, um zum Senden 320 und Empfangen 330 via V2V, V2I, V2X, DSRC und/oder 3GPP mit anderen Fahrzeugen zu kommunizieren.

Die Datenverarbeitungsschaltung 414 kann in Ausführungsbeispielen Hardware sein, die zur Durchführung eines der hierin beschriebenen Verfahren ausgebildet ist. Dies können beliebige Prozessorkerne, wie Digitale Signal-Prozessorkerne (DSPs) oder andere Prozessoren sein. Ausführungsbeispiele sind dabei nicht auf einen bestimmten Typ von Prozessorkern eingeschränkt. Es sind beliebige Prozessorkerne oder auch mehrere Prozessorkerne oder Mikrokontroller zur Implementierung der Datenverarbeitungsschaltung 414 denkbar. Es sind auch Implementierungen in integrierter Form mit anderen Vorrichtungen denkbar, beispielsweise in einer Steuereinheit für ein Fahrzeug, die zusätzlich noch ein oder mehrere andere Funktionen umfasst. In Ausführungsbeispielen kann die Datenverarbeitungsschaltung 414 durch einen Prozessorkern, einen Computerprozessorkern (CPU = Central Processing Unit), einen Grafikprozessorkern (GPU = Graphics Processing Unit), einen anwendungsspezifischen integrierten Schaltkreiskern (ASIC = Application-Specific Integrated Circuit), einen integrierten Schaltkreis (IC = Integrated Circuit), ein Ein-Chip-Systemkern (SOC = System on Chip), ein programmierbares Logikelement oder ein feldprogrammierbares Gatterarray mit einem Mikroprozessor (FPGA = Field Programmable Gate Array) als Kern des oben genannten Bausteins oder der Bausteine realisiert sein die Datenverarbeitungsschaltung 414 kann demnach jedweder Komponente entsprechen, die auf maschinelle Weise die Umgebungsinformation erhalten, zur Validierung aussenden und die Zuverlässigkeitsinformation empfangen kann.

Mit anderen Worten ausgedrückt, schaffen die erläuterten Verfahren 100 und 300 und Vorrichtungen 200 und 400 ein Konzept zur Validierung von Zustands-, Objekt- oder Situationserkennung im vernetzten Verkehr. Die Verfahren 100 und 300 und die Vorrichtungen 200 und 400 können in manchen Anwendungsbeispielen zusammenwirken. In konkreten Anwendungsbeispielen des Konzepts kann eine von einem Fahrzeug ausgesendete Nachricht/Meldung (Umgebungsinformation) über eine bestimmte Situation durch Sensorik und/oder Benutzereingaben eines oder mehrerer anderer Fahrzeuge im vernetzten Verkehr validiert werden, bevor sie innerhalb des vernetzten Verkehrs zur Steuerung, zum Beispiel zum Bestimmen von Fahreingriffen verwendet wird. Es kann im vernetzten Verkehr anhand einem Vorliegen der Zuverlässigkeitsinformation unterschieden werden, ob eine Meldung noch zu validieren oder bereits validiert worden ist. Gemäß dem hierin vorgeschlagenen Konzept können Fahrzeugen im vernetzten Verkehr, und gegebenenfalls einem mit den Fahrzeugen verbundenem externen Server/Backend, neben Meldungen der Fahrzeuge mit Umgebungsinformation Zuverlässigkeitsinformation über eine Verlässlichkeit der Umgebungsinformation zur Verfügung gestellt werden. Eine noch nicht validierte Meldung kann erst von einer Sensorik des die Meldung empfangenden Fahrzeugs oder mittels der Abfrage der Benutzereingabe überprüft werden, bevor ein Fahreingriff erfolgt. Erfolgt eine Bestätigung, kann die Meldung als verifiziert weiterverteilt werden, so dass andere Fahrzeuge ohne vorherige Validierung der Umgebungsinformation auf diese reagieren können. Das Konzept kann insbesondere vor Fehlerkennung von Gefahrensituationen ebenso wie vor bewussten böswilligen/unerwünschten Eingriffen in den vernetzten Verkehr beispielsweise mittels korrupter Daten schützen.

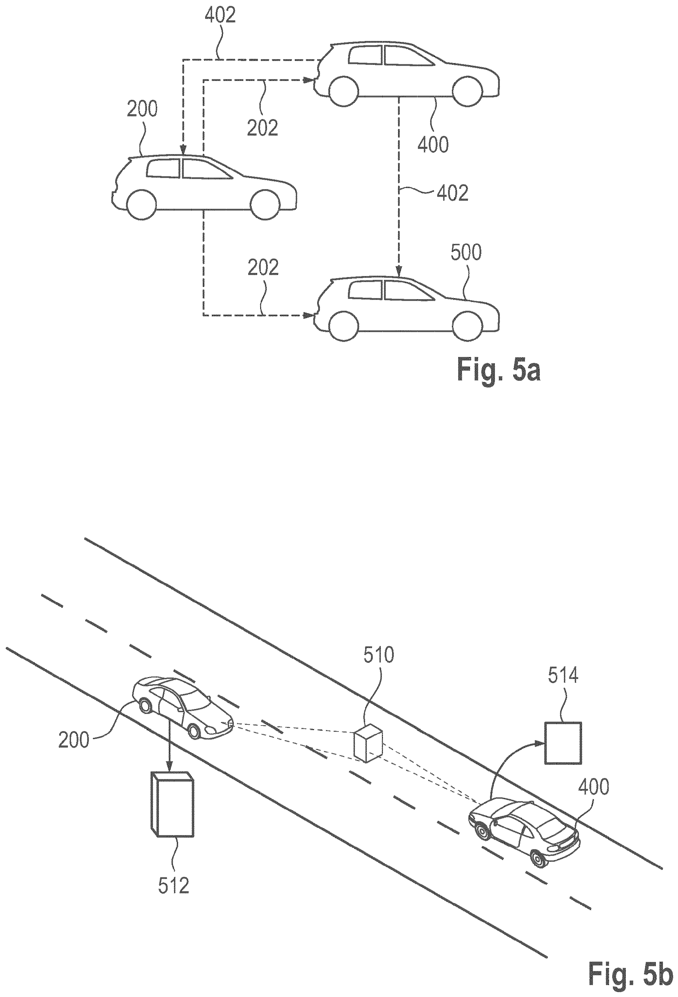

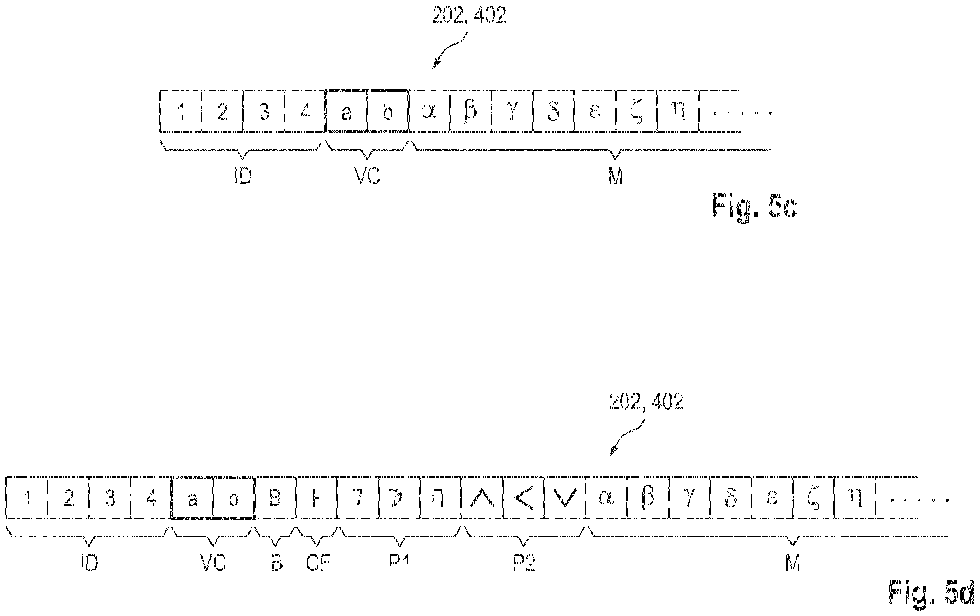

Fig. 5a, 5b, 5c und 5d zeigen ein beispielhaftes Szenario einer Kommunikation zwischen Fahrzeugen, anhand welchem ein Anwendungsbeispiel der Verfahren 100 und 300, sowie der Vorrichtungen 210 und 410 näher beschrieben werden soll.

Fig. 5a zeigt schematisch das Fahrzeug 200, das Fahrzeug 400 und ein Fahrzeug 500.

Wenn zum Beispiel von Fahrzeug 400 eine bestimmte Situation erkannt wird, sendet das Fahrzeug 400 die Umgebungsinformation mittels der Vorrichtung 410 gemäß Verfahren 300 aus. Zum Beispiel sendet das Fahrzeug 400 die Umgebungsinformation eingebettet in eine Datenstruktur, hier vorliegend eine Nachricht 402 mit Kontrollinformation und Nutzinformation an Fahrzeug 200 und Fahrzeug 500. Die Umgebungsinformation kann der Nutzinformation zugeordnet sein. Für eine Beschreibung nachfolgender Ausführungsbeispiele können die Umgebungsinformation und die Nutzinformation daher synonym verstanden werden. Es sei jedoch darauf hingewiesen, dass die Nutzinformation neben der Umgebungsinformation zusätzliche Information enthalten kann. Die Nachricht kann insbesondere als eine Bitfolge ausgeführt sein. Die Kontrollinformation und die Nutzinformation unterscheiden sich beispielsweise in ihrer Position innerhalb der Bitfolge.

Das Fahrzeug 200 empfängt neben Fahrzeug 500 unter Verwendung der Vorrichtung 210 gemäß Verfahren 100 die Umgebungsinformation mit der Nachricht 402 und validiert die Umgebungsinformation zur Erzeugung der Zuverlässigkeitsinformation. Das Fahrzeug 200 prüft bei der Validierung zum Beispiel die Umgebungsinformation in der Nachricht 402, welche beispielsweise angibt: "Geisterfahrer erkannt". Mittels Sensorik und/oder über eine Abfrage an einen Fahrer oder Beifahrer des Fahrzeugs 200 kann die Umgebungsinformation über den Geisterfahrer bestätigt oder widerlegt werden.

Ferner sendet das Fahrzeug 200 die Umgebungsinformation mit der Zuverlässigkeitsinformation verfahrensgemäß aus. Zum Beispiel sendet das Fahrzeug 200 die Umgebungsinformation und die Zuverlässigkeitsinformation zusammen eingebettet in einer Nachricht 202 an das Fahrzeug 400 und das Fahrzeug 500. Die Nachricht 202 weist beispielsweise ebenfalls Kontrollinformation und Nutzinformation auf. Zuverlässigkeitsinformation kann der Kontrollinformation und die Umgebungsinformation der Nutzinformation zugeordnet sein.

Die Fahrzeuge 400 und 500 können anhand der Zuverlässigkeitsinformation in der Nachricht 202 beurteilen, ob die Umgebungsinformation "Geisterfahrer erkannt" valide ist oder nicht. Abhängig von einer Angabe über die Glaubwürdigkeit/Validität/Plausibilität dieser Umgebungsinformation in der Zuverlässigkeitsinformation können die Fahrzeuge 400 und/oder 500 basierend auf der Zuverlässigkeitsinformation die Glaubwürdigkeit/Validität/Plausibilität beurteilen und die Umgebungsinformation entsprechend bei der Steuerung der Fahrzeuge 400 und/oder 500 gewichtet berücksichtigen. Das Fahrzeug 200 bestätigt beim Validieren beispielsweise die Angabe "Geisterfahrer erkannt". Entsprechend deutet die Zuverlässigkeitsinformation darauf hin, dass die Angabe valide ist. Die Fahrzeuge 400 und 500 beurteilen die Umgebungsinformation "Geisterfahrer erkannt" daher basierend auf der Zuverlässigkeitsinformation beispielsweise als valide. Entsprechend können bei den Fahrzeugen 400 und 500 basierend auf der als valide beurteilten Umgebungsinformation "Geisterfahrer erkannt" Fahreingriffe, wie zum Beispiel Brems- und/oder Ausweichmanöver vorgenommen werden. Wenn die Umgebungsinformation "Geisterfahrer erkannt" beim Validieren widerlegt wird und die Fahrzeuge 400 und 500 die Umgebungsinformation "Geisterfahrer erkannt" basierend auf der entsprechenden Zuverlässigkeitsinformation las nicht valide beurteilen, kann von Fahreingriffen als Reaktion auf die Umgebungsinformation "Geisterfahrer erkannt" abgesehen werden.

Die Kontrollinformation der Nachrichten 202 und 402 kann jeweils eine Kennung aufweisen. Wie der Fachmann verstehen wird kann unter Berücksichtigung der Kennung unerwünschtes mehrfaches Validieren der Umgebungsinformation durch dasselbe Fahrzeug verhindert werden.

Insbesondere können die Nachrichten 202 und 402 dieselbe Kennung aufweisen, zum Beispiel, indem Fahrzeug 200 die Kennung der Nachricht 402 für die Nachricht 202 übernimmt oder der Nachricht 202 zum Erzeugen der Nachricht 402 die Zuverlässigkeitsinformation hinzufügt. Dieselbe Kennung erlaubt eine höhere Effizienz beim Auslesen der Nachrichten 202 und 402. Zum Beispiel können Fahrzeug 400 und Fahrzeug 500, wenn diese feststellen, dass die Nachrichten 202 und 402 dieselbe Kennung aufweisen, aus der Nachricht 202 lediglich die Kontrollinformation umfassend die Zuverlässigkeitsinformation und aus der Nachricht 402 lediglich die Nutzinformation auslesen. Dies erspart beispielsweise das Auslesen der gesamten Nachricht 202 und der gesamten Nachricht 402.

Wie Fig. 5b zeigt, kann die Umgebungsinformation Information über ein Objekt 510 in der Umgebung enthalten und die Validierung der Umgebungsinformation beispielsweise anhand von Sensordaten über das Objekt 510, welche von dem Fahrzeug 200 erfasst wurden, erfolgen. Das Objekt ist Beispiel beispielsweise ein bewegtes Objekt (zum Beispiel ein Fahrzeug oder ein Fußgänger) oder ein unbewegtes Objekt (zum Beispiel ein Hindernis). Insbesondere kann bei der Validierung eine relative Position der Fahrzeuge 200 und 400 berücksichtigt werden. Im vorliegenden Beispiel geben die Umgebungsinformation zum Beispiel eine von dem Fahrzeug 400 sensorisch erfasste Form 514 und die Sensordaten aufgrund ihrer relativen Position und daher unterschiedlicher Perspektiven der Fahrzeuge 200 und 400 eine von der Form 514 verschiedene Form 512 des Objekts 510 an. Zur Validierung kann überprüft werden, ob plausibel ist, dass die Formen 512 und 514 unter Berücksichtigung der verschiedenen Perspektiven der Fahrzeuge 200 und 400 dasselbe Objekt, in dem Fall Objekt 510 abbilden. Wie der Fachmann verstehen wird, kann dies maschinell und zum Beispiel anhand identischer Merkmale in den Sensordaten und der Umgebungsinformation und/oder unter Anwendung einer Koordinatentransformation auf die Sensordaten und/oder die Umgebungsinformation überprüft werden. So kann etwa betrachtet werden: Fahrzeug 400 meldet über die Umgebungsinformation das Objekt 510 mit der Form 514 und einer ersten Position (relativ zu Fahrzeug 400). Nun kann zum Beispiel unter Anwendung einer Koordinatentransformation ermittelt werden, in welcher Form und in welcher Entfernung dasselbe Objekt 510 von Fahrzeug 200 erkannt werden müsste und zum Beispiel mit der Form 512 abgeglichen. Die Sensordaten von 200 können abgerufen und ausgewertet werden. Es wird dadurch beispielsweise bestimmt, ob eine Objekterkennung von Fahrzeug 400 valide ist. Um eine solche Validierung, bzw. die Koordinatentransformation zu ermöglichen, kann das Fahrzeug 400 mit der Umgebungsinformation seine eigene Position an das Fahrzeug 200 übermitteln.

In manchen Fällen kann das Fahrzeug 200 neben der Umgebungsinformation zudem erste Zuverlässigkeitsinformation über die Umgebungsinformation von einem anderen Fahrzeug, wie zum Beispiel dem Fahrzeug 400 oder 500, empfangen. Dies ist beispielsweise der Fall, wenn die Umgebungsinformation durch ein anderes Fahrzeug als das Fahrzeug 200 validiert wurde. In solchen Fällen kann das Validieren der Umgebungsinformation ein Erzeugen zweiter Zuverlässigkeitsinformation basierend auf der ersten Zuverlässigkeitsinformation und ein Aussenden der zweiten Zuverlässigkeitsinformation umfassen.

Die erste Zuverlässigkeitsinformation ist beispielsweise in die Nachricht 402 eingebettet. Zum Erzeugen der Nachricht 202 übernimmt das Fahrzeug 200 zum Beispiel die Nachricht 402 und ändert insbesondere die erste Zuverlässigkeitsinformation zur zweiten Zuverlässigkeitsinformation ab.

Fig. 5c zeigt beispielhaft ein mögliches Format für die Nachrichten 202 und 402. Wie anhand Fig. 5c zu sehen ist, sind die Nachrichten 202 und 402 als Bitfolge ausgeführt und enthalten zum Beispiel eine Kennung ID (engl.: identifier), eine Zählvariable VC für die Validität (engl.: validity counter) und eine Nutzinformation M (engl. sinngemäß: payload). Die Zählvariable VC stellt zum Beispiel die Zuverlässigkeitsinformation dar. Die Kennung ID, die Zählvariable VC und die Nutzinformation M können unterschiedliche Bereiche innerhalb der Bitfolge aufweisen. Die Kennung ID befindet sich zum Beispiel vor der Zählvariable VC innerhalb der Bitfolge. Auf der Zählvariable VC folgt innerhalb Bitfolge die Nutzinformation M. Die Kommunikation zwischen den Fahrzeugen 200, 400 und 500 soll nachfolgend in Bezug auf Fig. 5a anhand eines Beispiels dargestellt werden:
Die Nachricht 402 hat zum Beispiel die Kennung ID:"1234" und wird von dem Fahrzeug 400 mit der Zählvariable VC gleich "00" gesendet. Diese Zählvariable VC gibt beispielsweise an, dass die Umgebungsinformation in der Nutzinformation M noch nicht validiert ist, und kann als erste Zuverlässigkeitsinformation gesehen werden. Nach der Validierung durch Fahrzeug 200, übernimmt das Fahrzeug 200 zum Erzeugen der Nachricht 202 die Nachricht 402 mit der unveränderten Kennung "1234" und Nutzinformation M und ändert, wenn die Glaubwürdigkeit/Validität/Plausibilität, beziehungsweise die Umgebungsinformation bei der Validierung bestätigt werden konnte, auf VC gleich "01" und sendet die Nachricht 402 an die Fahrzeuge 400 und 500. Wenn die Umgebungsinformation widerlegt wird, wird die Zählvariable um 1 verringert. Die "neue" Zählvariable VC gleich "01" kann als zweite Zuverlässigkeitsinformation gesehen werden. Fahrzeuge, wie zum Beispiel Fahrzeug 500, die bereits die Nachricht 402 empfangen und decodiert haben, müssen von der Nachricht 202 nur den Teil bis zur Zählvariable VC empfangen und decodieren und können den Rest der Nachricht 202 und die Nutzinformation M der Nachricht 402, den das Fahrzeug 500 bereits empfangen hat, als validiert annehmen.

Innerhalb einer Flotte mehrerer Fahrzeuge kann dieses Verfahren mehrfach, zum Beispiel auf mehreren Fahrzeugen ausgeführt werden. Die Umgebungsinformation kann als Nutzinformation M von weiteren Nachrichten mit derselben Kennung ID nacheinander an mehrere Fahrzeuge weitergegeben werden. Dabei können weitere Validierungen der Umgebungsinformation auf den mehreren Fahrzeugen und dadurch weitere Änderungen an der Zählvariable VC erfolgen. Je mehr Fahrzeuge die Nutzinformation M validieren und weitersenden, desto höher kann die Zählvariable VC steigen. Vor einem Weiterleiten der Nutzinformation M wird beispielsweise der höchste bisher empfangene Zählwert um eins geändert (inkrementiert oder reduziert). Es sei darauf hingewiesen, dass die Zählvariable VC in manchen Ausführungsbeispielen abhängig von einer Sicherheit des Validierens um verschiedene Werte geändert werden kann. Beispielsweise kann eine Validierung der Umgebungsinformation durch einen Benutzer zu einer Änderung des Zählwerts um 10 führen, eine Validierung der Umgebungsinformation mittels Sensordaten mehrerer Sensoren zu einer Änderung der Zählvariable VC um 5 und eine Validierung mittels Sensordaten eines einzelnen Sensors zu einer Änderung der Zählvariable VC um 1 führen.

Es sei darauf hingewiesen, dass in manchen Ausführungsbeispielen je nach Ergebnis des Validierens die Zählvariable in anderer Weise geändert werden kann.

Wie in Fig. 5d gezeigt, können die Nachrichten 202 und 402 ein anderes Format aufweisen. Das in Fig. 5d gezeigte Format weist beispielsweise eine Bitfolge auf, welche neben der Kennung ID innerhalb der Bitfolge zwischen der Zählvariable VC und der Nutzinformation M Information B über eine Validierung der Umgebungsinformation oder der Nutzinformation M durch einen mit dem Fahrzeug 200 und/oder 400 verbundenen externen Server/Backend, Information CF (sog."ChangeFlag") über eine nachträgliche Änderung an der Nutzinformation M, Information P1 über eine Position eines Sensors, mittels welchem die Umgebungsinformation erzeugt wurde, und Information P2 über eine Position eines oder mehrerer Objekte, zu welchen Information in der Umgebungsinformation enthalten ist, zum Beispiel des Objekts 510, umfasst.

Die Information CF wird beispielsweise eingefügt, wenn die Umgebungsinformation nach einer Validierung innerhalb einer vorbestimmten Toleranz angepasst und/oder präzisiert wurde. Wenn die Information CF angibt, dass die Umgebungsinformation angepasst wurde, kann eine erneute Validierung sinnvoll sein.

Die Information B dient beispielsweise neben der Zählvariable VC als zusätzliches Maß für die Glaubwürdigkeit/Validität/Plausibilität der Umgebungsinformation oder Nutzinformation M.

Die Information B erlaubt es bei dichtem Verkehr eine Backendfunktionalität für die vernetzten Fahrzeuge, zum Beispiel die Fahrzeuge 200, 400 und 500, auszunutzen, auch wenn nur bei einem oder wenigen Fahrzeugen eine verfügbare Onlinedatenbandbreite für eine Verbindung mit dem Backend ausreicht.

Die Information P1 und P2 erlaubt beispielsweise ein Ermitteln einer relativen Position des Sensors, mittels welchem die Umgebungsinformation erzeugt wurde. Dadurch erlauben die Informationen P1 und P2 zum Beispiel ferner ein Ermitteln der relativen Position der Fahrzeuge 200 und 400 zueinander für die Validierung der Umgebungsinformation unter Berücksichtigung der relativen Position, wie bereits weiter oben erläutert.

Ausführungsbeispiele können darüber hinaus ein Computerprogramm mit einem Programmcode zum Ausführen eines oder mehrerer der obigen Verfahren sein oder sich darauf beziehen, wenn das Computerprogramm auf einem Computer oder Prozessor ausgeführt wird. Schritte, Operationen oder Prozesse von verschiedenen, oben beschriebenen Verfahren können durch programmierte Computer oder Prozessoren ausgeführt werden. Beispiele können auch Programmspeichervorrichtungen, z. B. Digitaldatenspeichermedien, abdecken, die maschinen-, prozessor- oder computerlesbar sind und maschinenausführbare, prozessorausführbare oder computerausführbare Programme von Anweisungen codieren. Die Anweisungen führen einige oder alle der Schritte der oben beschriebenen Verfahren aus oder verursachen deren Ausführung. Die Programmspeichervorrichtungen können z. B. Digitalspeicher, magnetische Speichermedien wie beispielsweise Magnetplatten und Magnetbänder, Festplattenlaufwerke oder optisch lesbare Digitaldatenspeichermedien umfassen oder sein. Weitere Beispiele können auch Computer, Prozessoren oder Steuereinheiten, die zum Ausführen der Schritte der oben beschriebenen Verfahren programmiert sind, oder (feld-)programmierbare Logik-Arrays ((F)PLAs = (Field) Programmable Logic Arrays) oder (feld-)programmierbare Gate-Arrays ((F)PGA = (Field) Programmable Gate Arrays), die zum Ausführen der Schritte der oben beschriebenen Verfahren programmiert sind, abdecken.

Funktionen verschiedener in den Figuren gezeigter Elemente sowie die bezeichneten Funktionsblöcke können in Form dedizierter Hardware, z. B "eines Signalanbieters", "einer Signalverarbeitungseinheit", "eines Prozessors", "einer Steuerung" etc. sowie als Hardware fähig zum Ausführen von Software in Verbindung mit zugehöriger Software implementiert sein. Bei Bereitstellung durch einen Prozessor können die Funktionen durch einen einzelnen dedizierten Prozessor, durch einen einzelnen gemeinschaftlich verwendeten Prozessor oder durch eine Mehrzahl von individuellen Prozessoren bereitgestellt sein, von denen einige oder von denen alle gemeinschaftlich verwendet werden können. Allerdings ist der Begriff "Prozessor" oder "Steuerung" bei Weitem nicht auf ausschließlich zur Ausführung von Software fähige Hardware begrenzt, sondern kann Digitalsignalprozessor-Hardware (DSP-Hardware; DSP = Digital Signal Processor), Netzprozessor, anwendungs-spezifische integrierte Schaltung (ASIC = Application Specific Integrated Circuit), feldprogrammierbare Logikanordnung (FPGA = Field Programmable Gate Array), Nurlesespeicher (ROM = Read Only Memory) zum Speichern von Software, Direktzugriffsspeicher (RAM = Random Access Memory) und nichtflüchtige Speichervorrichtung (storage) umfassen. Sonstige Hardware, herkömmliche und/oder kundenspezifische, kann auch eingeschlossen sein.

Ein Blockdiagramm kann zum Beispiel ein grobes Schaltdiagramm darstellen, das die Grundsätze der Offenbarung implementiert. Auf ähnliche Weise können ein Flussdiagramm, ein Ablaufdiagramm, ein Zustandsübergangsdiagramm, ein Pseudocode und dergleichen verschiedene Prozesse, Operationen oder Schritte repräsentieren, die zum Beispiel im Wesentlichen in computerlesbarem Medium dargestellt und so durch einen Computer oder Prozessor ausgeführt werden, ungeachtet dessen, ob ein solcher Computer oder Prozessor explizit gezeigt ist. In der Beschreibung oder in den Patentansprüchen offenbarte Verfahren können durch ein Bauelement implementiert werden, das ein Mittel zum Ausführen eines jeden der jeweiligen Schritte dieser Verfahren aufweist.

Es versteht sich, dass die Offenbarung mehrerer, in der Beschreibung oder den Ansprüchen offenbarter Schritte, Prozesse, Operationen oder Funktionen nicht als in der bestimmten Reihenfolge befindlich ausgelegt werden soll, sofern dies nicht explizit oder implizit anderweitig, z. B. aus technischen Gründen, angegeben ist. Daher werden diese durch die Offenbarung von mehreren Schritten oder Funktionen nicht auf eine bestimmte Reihenfolge begrenzt, es sei denn, dass diese Schritte oder Funktionen aus technischen Gründen nicht aus-tauschbar sind. Ferner kann bei einigen Beispielen ein einzelner Schritt, Funktion, Prozess oder Operation mehrere Teilschritte, -funktionen, -prozesse oder -operationen einschließen und/oder in dieselben aufgebrochen werden. Solche Teilschritte können eingeschlossen sein und Teil der Offenbarung dieses Einzelschritts sein, sofern sie nicht explizit ausgeschlossen sind.

### Bezugszeichenliste

- 100: Verfahren
- 110: Empfangen von Umgebungsinformation
- 120: Validieren der Umgebungsinformation
- 130: Aussenden der Umgebungsinformation mit der Zuverlässigkeitsinformation
- 200: Fahrzeug
- 202: Nachricht
- 210: Vorrichtung
- 212: eine oder mehrere Schnittstellen
- 214: Datenverarbeitungsschaltung
- 300: Verfahren
- 310: Erhalten von Umgebungsinformation
- 320: Senden der Umgebungsinformation an zumindest ein anderes Fahrzeug
- 330: Empfangen der Zuverlässigkeitsinformation von dem anderen Fahrzeug
- 400: Fahrzeug
- 402: Nachricht
- 500: Fahrzeug
- 510: Objekt
- 512: Form
- 514: Form
- B: Information über eine Validierung durch einen externen Server/Backend
- CF: Information über eine nachträgliche Änderung an der Nutzinformation
- ID: Kennung
- M: Nutzinformation
- P1: Information über eine Position eines Sensors
- P2: Information über eine Position eines oder mehrerer Objekte
- VC: Zählvariable

## Patentansprüche

1. Ein Verfahren (100) zur Durchführung in einem Fahrzeug, das Verfahren umfassend:
Empfangen (110) von Umgebungsinformation über eine Umgebung des Fahrzeugs von einem anderen Fahrzeug oder von einer Verkehrsinfrastruktur;
Validieren (120) der Umgebungsinformation zum Erzeugen von Zuverlässigkeitsinformation über die Umgebungsinformation, wobei das Validieren ein Vergleichen der Umgebungsinformation mit Sensordaten zumindest eines Sensors des Fahrzeugs umfasst;
Empfangen von Information über einen Sensortyp zumindest eines Sensors, mit welchem die Umgebungsinformation von dem anderen Fahrzeug ermittelt wurde, und ferner umfassend ein Auswählen eines anderen Sensortyps basierend auf der Information über den Sensortyp zum Vergleichen der Umgebungsinformation mit den Sensordaten des anderen Sensortyps; und
Aussenden (130) der Umgebungsinformation mit der Zuverlässigkeitsinformation.

2. Das Verfahren (100) gemäß Anspruch 1, wobei die Umgebungsinformation Messdaten der Umgebung, interpretierte Messdaten und/oder eine Nutzereingabe umfasst.

3. Das Verfahren (100) gemäß einem der vorhergehenden Ansprüche, wobei das Validieren ein Validieren der Umgebungsinformation anhand einer Benutzereingabe umfasst.

4. Das Verfahren (100) gemäß einem der vorhergehenden Ansprüche, wobei das Empfangen von Umgebungsinformation ein Empfangen erster Zuverlässigkeitsinformation über die Umgebungsinformation von einem anderen Fahrzeug umfasst, wobei das Validieren der Umgebungsinformation ein Erzeugen zweiter Zuverlässigkeitsinformation basierend auf der ersten Zuverlässigkeitsinformation umfasst, und wobei das Aussenden der Umgebungsinformation mit der Zuverlässigkeitsinformation ein Aussenden der zweiten Zuverlässigkeitsinformation umfasst.

5. Das Verfahren (100) gemäß einem der vorhergehenden Ansprüche, das Verfahren (300) umfassend:
Senden (320) der Umgebungsinformation an zumindest ein anderes Fahrzeug zur Validierung der Umgebungsinformation durch das andere Fahrzeug und Erzeugung von Zuverlässigkeitsinformation über die Umgebungsinformation; und
Empfangen (330) der Zuverlässigkeitsinformation von dem anderen Fahrzeug.

6. Computerprogramm mit einem Programmcode zum Durchführen eines der Verfahren (100, 300) gemäß einem der Ansprüche 1 bis 5, wenn der Programmcode auf einem Computer, einem Prozessor, einer Datenverarbeitungsschaltung, einem Kontrollmodul oder einer programmierbaren Hardwarekomponente ausgeführt wird.

7. Eine Vorrichtung (210, 410) für ein Fahrzeug (200, 400), die Vorrichtung (210, 410) umfassend:
eine oder mehrere Schnittstellen (212, 412) zur Kommunikation; und
eine Datenverarbeitungsschaltung (214, 414) zur Durchführung eines der Verfahren (100, 300) 1 bis 5.

8. Ein Fahrzeug (200, 400) umfassend die Vorrichtung (210, 410) gemäß Anspruch 7.

## Claims

1. A method (100) for implementation in a vehicle, the method comprising:
receiving (110) environmental information about an environment of the vehicle from another vehicle or from a traffic infrastructure;
validating (120) the environmental information to generate reliability information about the environmental information, wherein validating comprises comparing the environmental information with sensor data from at least one sensor of the vehicle;
receiving information about a sensor type of at least one sensor with which the environmental information from the other vehicle was determined, and further comprising selecting another sensor type on the basis of the information about the sensor type in order to compare the environmental information with the sensor data of the other sensor type; and
transmitting (130) the environmental information with the reliability information.

2. The method (100) according to claim 1, wherein the environmental information comprises measurement data of the environment, interpreted measurement data and/or a user input.

3. The method (100) according to either of the preceding claims, wherein validating comprises validating the environmental information on the basis of a user input.

4. The method (100) according to any of the preceding claims, wherein receiving environmental information comprises receiving first reliability information about the environmental information from another vehicle, wherein validating the environmental information comprises generating second reliability information on the basis of the first reliability information, and wherein transmitting the environmental information with the reliability information comprises transmitting the second reliability information.

5. The method (100) according to any of the preceding claims, the method (300) comprising:
sending (320) the environmental information to at least one other vehicle in order to validate the environmental information by the other vehicle and generate reliability information about the environmental information; and
receiving (330) the reliability information from the other vehicle.

6. A computer program having a program code for implementing one of the methods (100, 300) according to any of claims 1 to 5 when the program code is executed on a computer, a processor, a data processing circuit, a control module, or a programmable hardware component.

7. A device (210, 410) for a vehicle (200, 400), the device (210, 410) comprising:
one or more interfaces (212, 412) for communication; and
a data processing circuit (214, 414) for implementing one of the methods (100, 300) 1 to 5.

8. A vehicle (200, 400) comprising the device (210, 410) according to claim 7.

## Revendications

1. Procédé (100) destiné à être mis en œuvre dans un véhicule, le procédé comprenant : la réception (110) d'informations d'environnement concernant un environnement du véhicule provenant d'un autre véhicule ou d'une infrastructure de trafic ;
la validation (120) des informations d'environnement pour la génération d'informations de fiabilité concernant les informations d'environnement, dans lequel la validation comprend une comparaison des informations d'environnement avec des données de capteur d'au moins un capteur du véhicule ;
la réception d'informations concernant un type de capteur d'au moins un capteur avec lequel les informations d'environnement ont été déterminées par l'autre véhicule, et comprenant en outre une sélection d'un autre type de capteur sur la base des informations concernant le type de capteur pour la comparaison des informations d'environnement avec les données de capteur de l'autre type de capteur ; et
l'émission (130) des informations d'environnement avec les informations de fiabilité.

2. Procédé (100) selon la revendication 1, dans lequel les informations d'environnement comprennent des données de mesure de l'environnement, des données de mesure interprétées et/ou une entrée utilisateur.

3. Procédé (100) selon l'une des revendications précédentes, dans lequel la validation comprend une validation des informations d'environnement à partir d'une entrée utilisateur.

4. Procédé (100) selon l'une des revendications précédentes, dans lequel la réception d'informations d'environnement comprend une réception de premières informations de fiabilité concernant les informations d'environnement provenant d'un autre véhicule, dans lequel la validation des informations d'environnement comprend une génération de secondes informations de fiabilité sur la base des premières informations de fiabilité, et dans lequel l'émission des informations d'environnement avec les informations de fiabilité comprend une émission des secondes informations de fiabilité.

5. Procédé (100) selon l'une des revendications précédentes, le procédé (300) comprenant :
l'envoi (320) des informations d'environnement à au moins un autre véhicule pour la validation des informations d'environnement par l'autre véhicule et la génération d'informations de fiabilité concernant les informations d'environnement ; et
la réception (330) des informations de fiabilité provenant de l'autre véhicule.

6. Programme informatique comportant un code de programme pour la mise en œuvre de l'un des procédés (100, 300) selon l'une des revendications 1 à 5, lorsque le code de programme est exécuté sur un ordinateur, un processeur, un circuit de traitement de données, un module de commande ou un composant matériel programmable.

7. Dispositif (210, 410) pour un véhicule (200, 400), le dispositif (210, 410) comprenant :
une ou plusieurs interfaces (212, 412) pour la communication ; et
un circuit de traitement de données (214, 414) pour la mise en œuvre de l'un des procédés (100, 300) 1 à 5.

8. Véhicule (200, 400) comprenant le dispositif (210, 410) selon la revendication 7.
